# EUROPEAN PATENT APPLICATION

(11) **EP 4 487 954 A1**
(43) Date of publication of application: **08.01.2025**
(21) Application number: 23763436.5
(22) Date of filing: 28.02.2023
(51) Int. Cl.: B01J 35/02, C01B 13/02, C01B 3/04, B01J 37/04, B01J 37/34, B01J 23/68

(54) **JUNCTION PHOTOCATALYST**

(30) Priority: 01.03.2022 JP 2022030953
(71) Applicant: Kao Corporation, Tokyo 103-8210 (JP)
(72) Inventor: MIYASATO,Ryo, Wakayama-shi, Wakayama 640-8580 (JP); NAKAJIMA,Kana, Wakayama-shi, Wakayama 640-8580 (JP); SHIRAISHI,Yohei, Wakayama-shi, Wakayama 640-8580 (JP)
(74) Representative: Hoffmann Eitle
(86) International application number: PCT/JP2023/007271
(87) International publication number: WO 2023/167179

(57) **Abstract**

The present invention provides a heterojunction photocatalyst having higher catalytic activity than that of conventional junction photocatalysts. The heterojunction photocatalyst of the present invention is a heterojunction photocatalyst having a solid state mediator between a hydrogen-evolution photocatalyst and an oxygen-evolution photocatalyst, in which the solid state mediator and the hydrogen-evolution photocatalyst are joined to each other via an ionic polymer.

## Description

### TECHNICAL FIELD

The present invention relates to a method for producing a heterojunction photocatalyst having a solid state mediator between a hydrogen-evolution photocatalyst and an oxygen-evolution photocatalyst, a method for producing the heterojunction photocatalyst, a photocatalyst composite, use of a heterojunction photocatalyst, and a method for producing hydrogen.

### BACKGROUND ART

In recent years, a technique for producing hydrogen and oxygen by water splitting using a photocatalyst and sunlight has attracted attention. When water splitting is occurred by a photocatalyst, it is preferable to use a photocatalyst that catalyzes both a reduction of water (reduction of protons) and an oxidation of water. However, the type of such a photocatalyst is limited, and water splitting activity tends to be low.

Therefore, a method for efficient water splitting by using a hydrogen-evolution photocatalyst that catalyzes a reduction of water and an oxygen-evolution photocatalyst that catalyzes an oxidation of water in combination has been studied.

For example, a water splitting system by using a combination of a hydrogen-evolution photocatalyst and an oxygen-evolution photocatalyst is called a Z-scheme system. In the Z-scheme, for example, a photocatalyst obtained by combining an oxygen-evolution photocatalyst that splits water with visible light to generate oxygen, a hydrogen-evolution photocatalyst that splits water with visible light to generate hydrogen, and a reduction-oxidation mediator is used. The Z-scheme using this photocatalyst enables overall water splitting (hydrogen : oxygen = 2 : 1 (stoichiometric ratio)) by repeating a cycle in which excited electrons that are generated in the oxygen-evolution photocatalyst and do not contribute to reduction of water, reduce the reduction-oxidation mediator, and the reduced reduction-oxidation mediator is oxidized by excited holes that are generated in the hydrogen-evolution photocatalyst and do not contribute to oxidation of water, and returns to the reduction-oxidation mediator before being reduced.

However, in order to cause the Z-scheme using the hydrogen-evolution photocatalyst and the oxygen-evolution photocatalyst to catalytically function, a reduction-oxidation mediator (for example, Fe³⁺/Fe²⁺ or I⁻/IO₃⁻) is required, and there are problems that the reduction-oxidation mediator has low quantum efficiency and consequently low water splitting activity. In addition, it is necessary to select an appropriate photocatalyst with respect to the reduction-oxidation potential of the reduction-oxidation mediator, which reduces the variety of photocatalysts that can be selected.

On the other hand, as a heterojunction photocatalyst that does not include a reduction-oxidation mediator, for example, Patent Document 1 proposes a photocatalyst layer including: first photocatalyst particles that are visible light-responsive for hydrogen generation; second photocatalyst particles that are visible light-responsive for oxygen generation; and conductive particles that are provided between the first photocatalyst particles and the second photocatalyst particles, have a Fermi level at a position more negative than an electron energy level at an upper end of a valence band of the first photocatalyst particles, and have a Fermi level at a position more positive than an electron energy level at a lower end of a conduction band of the second photocatalyst particles, and are capable of storing electrons and holes, in which the conductive particles are disposed so as to be connected to the first photocatalyst particles and the second photocatalyst particles.

In addition, Non-Patent Document 1 proposes a Z-scheme photocatalyst having a hierarchical structure including ZnRh₂O₄/Au/BiVO₄.

### PRIOR ART DOCUMENT

### PATENT DOCUMENT

Patent Document 1: JP-A-2017-124394

### NON-PATENT DOCUMENT

Non-Patent Document 1: Toshihiro Takashima et al., J. Mater. Chem. A, 2019, 7, 10372-10378

### SUMMARY OF THE INVENTION

### PROBLEMS TO BE SOLVED BY THE INVENTION

A heterojunction photocatalyst in which a hydrogen-evolution photocatalyst and an oxygen-evolution photocatalyst are joined via a metal or a metal oxide has a very simple configuration, and exhibits high catalytic activity in a water splitting reaction or the like under visible light irradiation, but is required to have improved catalytic activity.

The present invention has been made in view of the above circumstances, and provides a heterojunction photocatalyst having higher catalytic activity than that of a conventional heterojunction photocatalyst.

### MEANS FOR SOLVING THE PROBLEMS

As a result of an earnest study, the inventors of the present invention have found out that the problems can be solved by the following heterojunction photocatalyst.

In other words, the present invention relates to the following 1. to 6.
1. A heterojunction photocatalyst having a solid state mediator between a hydrogen-evolution photocatalyst and an oxygen-evolution photocatalyst, in which
   the solid state mediator and the hydrogen-evolution photocatalyst are joined to each other via an ionic polymer.
2. A method for producing the heterojunction photocatalyst, the method including the following steps 1 to 4, provided that steps 2 and 3 are performed in random order:
   step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
   step 2: a step of introducing an ionic group into the solid state mediator to obtain an oxygen-evolution photocatalyst to which a solid state mediator having the ionic group is joined;
   step 3: a step of introducing an ionic polymer having a charge opposite to a charge of the ionic group into the hydrogen-evolution photocatalyst; and
   step 4: a step of mixing the oxygen-evolution photocatalyst obtained in step 2 to which a solid state mediator having the ionic group is joined with the hydrogen-evolution photocatalyst obtained in step 3 into which the ionic polymer is introduced.
3. A method for producing the heterojunction photocatalyst, the method including the following steps 1, 2', 3' and 4', provided that steps 2' and 3' are performed in random order:
   step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
   step 2': a step of introducing an ionic group into the solid state mediator and further reacting the ionic group with an ionic polymer having a charge opposite to a charge of the ionic group to obtain an oxygen-evolution photocatalyst to which a solid state mediator having the ionic polymer is joined;
   step 3': a step of introducing an ionic polymer having a charge opposite to the charge of the ionic polymer into the hydrogen-evolution photocatalyst; and
   step 4': a step of mixing the oxygen-evolution photocatalyst obtained in step 2' to which a solid state mediator having the ionic polymer is joined with the hydrogen-evolution photocatalyst obtained in step 3' into which the ionic polymer is introduced.
4. A photocatalyst composite including the heterojunction photocatalyst on a substrate.
5. Use of the heterojunction photocatalyst as a photocatalyst for water splitting or a photocatalyst for organic substance decomposition.
6. A method for producing hydrogen, the method including irradiating the heterojunction photocatalyst or the photocatalyst composite with light in presence of water or an alcohol.

In the heterojunction photocatalyst of the present invention, as a solid state mediator and a hydrogen-evolution photocatalyst are joined to each other via an ionic polymer, strong electrostatic interaction acts and the hydrogen-evolution photocatalyst and an oxygen-evolution photocatalyst are not separated from each other but are joined to each other via the solid state mediator, and thus the catalytic activity is improved and water can be split into oxygen and hydrogen with high efficiency.

### BRIEF DESCRIPTION OF THE DRAWINGS

Fig. 1 is a SEM image of Au-BiVO₄ in Example 1.
Fig. 2 is a SEM image of a heterojunction photocatalyst in Example 1.
Fig. 3 is volume particle size distribution of a heterojunction photocatalyst (junction particles) and the like in Example 1.
Fig. 4 is volume particle size distribution of a mixed sample of Ru-supported SrTiO₃ and Au-BiVO₄ and the like in Comparative Example 1.

### MODE FOR CARRYING OUT THE INVENTION

The present invention is described in detail below.

### <Heterojunction photocatalyst>

The heterojunction photocatalyst of the present invention has a solid state mediator between a hydrogen-evolution photocatalyst and an oxygen-evolution photocatalyst, and the solid state mediator and the hydrogen-evolution photocatalyst are joined to each other via an ionic polymer.

Specifically, the oxygen-evolution photocatalyst is directly or indirectly joined to a part of the solid state mediator, the hydrogen-evolution photocatalyst is directly or indirectly joined to another part of the solid state mediator, and the hydrogen-evolution photocatalyst and the oxygen-evolution photocatalyst are joined with at least the solid state mediator interposed therebetween.

With regard to the solid state mediator and oxygen-evolution photocatalyst, as described later, it is preferable that the solid state mediator is joined onto the oxygen-evolution photocatalyst by at least one method selected from the group consisting of a photoelectrodeposition method, an impregnation supporting method, and a precipitation method, in each of which a solid state mediator or a precursor of the solid state mediator is used.

The solid state mediator and the hydrogen-evolution photocatalyst are joined to each other via an ionic polymer, and it is preferable that the solid state mediator has an ionic group, and the solid state mediator and the hydrogen-evolution photocatalyst are joined to each other via the ionic group of the solid state mediator (preferably the ionic group introduced into the solid state mediator) and an ionic polymer having a charge opposite to that of the ionic group.

In the present invention, the term "join" refers to a state in which the oxygen-evolution photocatalyst and the hydrogen-evolution photocatalyst are integrated to such an extent that the oxygen-evolution photocatalyst and the hydrogen-evolution photocatalyst do not separate during a photocatalytic reaction. In the present invention, the term "electrons collecting surface" means an exposed crystal facet on which excited electrons are most likely to gather in various structures of the oxygen-evolution photocatalyst.

In an aspect of the heterojunction photocatalyst of the present invention, a solid state mediator has an ionic group, a hydrogen-evolution photocatalyst has the ionic polymer having a charge opposite to the charge of the ionic group, and the solid state mediator and the hydrogen-evolution photocatalyst are joined to each other by ionic bonding between the ionic group and the ionic polymer.

In an aspect of the heterojunction photocatalyst of the present invention, a solid state mediator has an ionic group, a hydrogen-evolution photocatalyst has an ionic polymer A and further an ionic polymer B having a charge opposite to the charge of the ionic group via the ionic polymer A, and the solid state mediator and the hydrogen-evolution photocatalyst are joined to each other by ionic bonding between the ionic group and the ionic polymer B.

In an aspect of the heterojunction photocatalyst of the present invention, a solid state mediator has an ionic group and further an ionic polymer B having a charge opposite to the charge of the ionic group via the ionic group, a hydrogen-evolution photocatalyst has an ionic polymer A, and the solid state mediator and the hydrogen-evolution photocatalyst are joined to each other by ionic bonding between the ionic polymer B of the solid state mediator and the ionic polymer A of the hydrogen-evolution photocatalyst.

In a case where the ionic group of the solid state mediator is an anionic group, the ionic polymer A is an anionic polymer and the ionic polymer B is a cationic polymer. In a case where the ionic group of the solid state mediator is a cationic group, the ionic polymer A is a cationic polymer and the ionic polymer B is an anionic polymer.

The hydrogen-evolution photocatalyst is not particularly limited, and examples thereof include metal oxides such as TiO₂, SrTiO₃, La₂Ti₂O₇, SnNb₂O₆, and compounds in which these metal oxides are doped with one or more metals such as Cr, Sb, Ta, Ir, and La; metal oxynitrides or metal nitrides such as LaTiO₂N, BaTaO₂N, BaNbO₂N, TaON, Ta₃N₅, and Ge₃N₄; metal sulfides, metal selenides or metal sulfuric selenides such as CuGaS₂, CuInS₂, Cu(Ga, In) S₂, CuGaSe₂, CuInSe₂, Cu(Ga, In)Se₂, Cu₂ZnSnS₄ (CZTS), and Cu₂ZnSn(S, Se)₄; metal oxysulfides or metal oxyselenides such as La₅Ti₂CuS₅O₇, La₅Ti₂AgS₅O₇, La₅Ti₂CuSe₅O₇, and La₅Ti₂AgSe₅O₇; and the like. These may be used singly or in combination of two or more types thereof. Among them, from the viewpoint of enhancing the catalytic activity, preferably one or two or more selected from metal oxides, more preferably one or two or more selected from transition metal oxides, still more preferably one or two or more selected from oxides of elements belonging to the Group 4 of the periodic table, and still even more preferably SrTiO₃.

The oxygen-evolution photocatalyst is not particularly limited, and examples thereof include metal oxides such as BiVO₄, TiO₂, WO₃, SrTiO₃, Ag₃PO₄, SnNb₂O₆, Bi₂WO₆, Fe₂TiO₅, Fe₂O₃, Bi₂MoO₆, and compounds in which these metal oxides are doped with one or more metals such as Cr, Ni, Sb, Nb, Th, Mo, and W; metal nitrides such as Ta₂N₅ and Ge₃N₄; metal oxynitrides such as LaTiO₂N, BaTaO₂N, BaNbO₂N, and TaON; and the like. These may be used singly or in combination of two or more types thereof. Among them, from the viewpoint of enhancing the catalytic activity, the oxygen-evolution photocatalyst is preferably one or two or more selected from metal oxides, more preferably one or two or more selected from transition metals oxides, still more preferably one or two or more selected from oxides of one or two or more elements selected from elements belonging to the Groups 4 and 5 of the periodic table, and still even more preferably BiVO₄.

The hydrogen-evolution photocatalyst and the oxygen-evolution photocatalyst preferably have a cocatalyst on a surface thereof. As a result, the reduction and oxidation of water or the like are promoted, and the evolution efficiencies of hydrogen and oxygen evolution are improved.

Examples of the cocatalyst of the hydrogen-evolution photocatalyst include transition metals such as Pt, Pd, Ru, Ni, Au, Fe, Ir, and Rh; metal oxides such as NiO, RuO₂, IrO₂, and Rh₂O₂; metal sulfides such as NiS and MoS₂; Cr-Rh composite oxide; and the like. These may be used singly or in combination of two or more types thereof. Among them, from the viewpoint of hydrogen evolution efficiency, the cocatalyst is preferably one or two or more selected from transition metals, more preferably one or two or more selected from metals belonging to the Group 10 of the periodic table, and still more preferably Pt.

Examples of the cocatalyst of the oxygen-evolution photocatalyst include transition metals such as Mn, Fe, Co, Ir, Ru, Rh, Ni, Sb, Nb, Th, and Cr; oxides and hydroxides of these transition metals; and the like. These may be used singly or in combination of two or more types thereof. Among them, one or two or more selected from transition metals oxides are preferable from the viewpoint of oxygen evolution efficiency.

Examples of the method for supporting the cocatalyst on the surface of the hydrogen-evolution photocatalyst or the oxygen-evolution photocatalyst include a photoelectrodeposition method, an impregnation method, an adsorption method, a hydrogen reduction method, an electroless plating method, and the like.

The impregnation method and the adsorption method are methods in which the photocatalyst is dispersed in a solution in which a cocatalyst precursor is dissolved to adsorb the cocatalyst precursor on the surface of the photocatalyst. Examples of the cocatalyst precursor include chlorides, nitrates, ammine salts of the transition metals, and the like.

Preferably, the cocatalyst precursor is supported on the surface of the photocatalyst and then reduced. The activity of the catalyst is increased by reducing the cocatalyst precursor to a metal state. Examples of the method for reducing the cocatalyst precursor include a photoreduction method, a chemical reduction method, and the like.

The photoreduction method is a method in which a cocatalyst precursor adsorbed to a photocatalyst is reduced by excited electrons generated in the photocatalyst by irradiating the photocatalyst with ultraviolet light or visible light. The chemical reduction method is a method in which the cocatalyst precursor is reduced under a hydrogen gas stream at about 400°C or less, preferably 300°C or less. The cocatalyst supported on the surface of the photocatalyst is particulate, and the amount of the cocatalyst to be supported may be appropriately adjusted.

The solid state mediator is a material capable of storing excited electrons that are generated in the oxygen-evolution photocatalyst and do not contribute to reduction of water or the like and holes that are generated in the hydrogen-evolution photocatalyst and do not contribute to oxidation of water or the like, and capable of causing a charge recombination reaction between the excited electrons and the holes.

Examples of the solid state mediator include transition metals such as gold, silver, copper, nickel, titanium, manganese, rhodium, palladium, ruthenium, and iridium; transition metal compounds such as oxides, nitrides, and carbides of these transition metals; doped metal oxides such as tin-doped indium oxide (ITO), metal (B, Al, Ga)-doped zinc oxide, fluorine-doped tin oxide, and antimony-doped tin oxide; and the like. These may be used singly or in combination of two or more types thereof. Among these, from the viewpoint of enhancing the catalytic activity, the solid state mediator includes preferably one or two or more selected from transition metals or compounds thereof, more preferably one or two or more selected from transition metals including elements belonging to the Group 11 of the periodic table or compounds thereof, still more preferably one or two or more selected from gold or silver, still more preferably gold.

The electrons collecting surface of the oxygen-evolution photocatalyst depends on the composition of the material and the crystal system. Examples of the method for specifying the electrons collecting surface include a method in which a solution of a precursor of metal such as Pt, Au, or Ag is brought into contact with semiconductor crystal particles as a material of the oxygen-evolution photocatalyst to cause the semiconductor crystal particles to support metal particles precipitated by a photoprecipitation method, and a crystal facet on which the metal particles are precipitated is confirmed with SEM (scanning electron microscope) or TEM (transmission electron microscope). The identification of the crystal facet on which the metal particles are precipitated can be performed, for example, by specifying a crystal facet spacing attributed from lattice fringes observed by TEM.

The electrons collecting surface of the oxygen-evolution photocatalyst is, for example, the {010} plane or the {040} plane in the case of BiVO₄ (monoclinic scheelite crystal), the {110} plane in the case of TiO₂ (rutile crystal), the {101} plane in the case of TiO₂ (anatase crystal), the {002} plane in the case of WO₃ (monoclinic crystal), the {110} plane in the case of SrTiO₃ (perovskite crystal), and the {110} plane in the case of Ag₃PO₄ (cubic crystal).

In the heterojunction photocatalyst, the hydrogen-evolution photocatalyst is preferably selectively joined to the solid state mediator.

### <Method for producing heterojunction photocatalyst>

The method for producing a heterojunction photocatalyst of the present invention is, for example, a method in which the solid state mediator is joined to the surface of the oxygen-evolution photocatalyst and then the hydrogen-evolution photocatalyst is joined to the surface of the solid state mediator. Specifically, the following methods for producing (I) and (II) may be mentioned.

In other words, the method for producing a heterojunction photocatalyst of the present invention is preferably, for example, a method (I) for producing a heterojunction photocatalyst, which includes the following steps 1 to 4. Provided that steps 2 and 3 are performed in random order. Step 3 may be performed after step 2, step 2 may be performed after step 3, or steps 2 and 3 may be performed at the same time.

Step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used

Step 2: a step of introducing an ionic group into the solid state mediator to obtain an oxygen-evolution photocatalyst to which a solid state mediator having the ionic group is joined

Step 3: a step of introducing an ionic polymer having a charge opposite to a charge of the ionic group into the hydrogen-evolution photocatalyst

Step 4: a step of mixing the oxygen-evolution photocatalyst obtained in step 2 to which a solid state mediator having the ionic group is joined with the hydrogen-evolution photocatalyst obtained in step 3 into which the ionic polymer is introduced

The method for producing a heterojunction photocatalyst of the present invention is, for example, a method (II) for producing a heterojunction photocatalyst, which includes the following steps 1, 2', 3', and 4'. provided that steps 2' and 3' are performed in random order: Step 3' may be performed after step 2', step 2' may be performed after step 3', or steps 2' and 3' may be performed at the same time.

Step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used

Step 2': a step of introducing an ionic group into the solid state mediator and further reacting the ionic group with an ionic polymer having a charge opposite to a charge of the ionic group to obtain an oxygen-evolution photocatalyst to which a solid state mediator having the ionic polymer is joined

Step 3': a step of introducing an ionic polymer having a charge opposite to the charge of the ionic polymer into the hydrogen-evolution photocatalyst

Step 4': a step of mixing the oxygen-evolution photocatalyst obtained in step 2' to which a solid state mediator having the ionic polymer is joined with the hydrogen-evolution photocatalyst obtained in step 3' into which the ionic polymer is introduced

Step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used

In the step 1, the method for joining (supporting) the solid state mediator onto the surface of the oxygen-evolution photocatalyst is not particularly limited, but for example, it is preferable to use at least one method selected from the group consisting of a photoelectrodeposition method, an impregnation supporting method, and a precipitation method.

The photoelectrodeposition method is a method in which a dispersion containing a photocatalyst, a metal salt (precursor of solid state mediator), and an organic carboxylic acid compound is irradiated with light to reduce the metal salt as well as precipitate metal particles or metal compound particles (solid state mediator) and join (support) the particles to (on) the surface of the photocatalyst. Examples of the precursor of the solid state mediator include ionic salts of mediators such as silver nitrate and gold halides (tetrachloroauric acid).

The impregnation supporting method is a method in which a photocatalyst is mixed with a solution or dispersion in which a metal salt (precursor of solid state mediator) and an organic carboxylic acid compound are dissolved or dispersed, then the solvent is removed by solid-liquid separation through filtration, decantation, or centrifugation, heating, or distillation of the solvent under reduced pressure, or the like to support the metal salt on the surface of the photocatalyst, and then the metal salt is fired or reduced to join (support) metal particles or metal compound particles (solid state mediator) to (on) the surface of the photocatalyst.

The precipitation method is a method in which a photocatalyst is mixed with metal particles or metal compound particles (solid state mediator) obtained by reducing a metal salt (precursor of solid state mediator) in a solution containing an organic carboxylic acid compound to join (support) the metal particles or metal compound particles (solid state mediator) to (on) the surface of the photocatalyst.

The photoelectrodeposition method is preferable from the viewpoint of increasing the coverage of the solid state mediator to the electron collecting surface of the oxygen-evolution photocatalyst.

The photoelectrodeposition method is a method in which a dispersion containing an oxygen-evolution photocatalyst, an organic carboxylic acid compound, and a solid state mediator or a precursor of the solid state mediator is irradiated with light to join (support) the solid state mediator to (on) the oxygen-evolution photocatalyst, and at this time, it is considered that electrons and holes are generated in the photocatalyst by the light irradiation, and the electrons cause the reduction and precipitation of the solid state mediator and the holes cause the oxidation of water and the like.

As the solvent used in the dispersion, water is preferable, but lower alcohols such as methanol, ethanol, and 2-propanol can also be used as an auxiliary agent (sacrificial reagent) in order to promote the consumption of holes.

The organic carboxylic acid compound is estimated to contribute to the reduction of the metal salt (precursor of solid state mediator), and is considered to also act as an auxiliary agent for joining (supporting) the solid state mediator onto the oxygen-evolution photocatalyst. The use of the organic carboxylic acid compound improves the coverage of the solid state mediator to the electrons collecting surface of the oxygen-evolution photocatalyst, and for example, BiVO₄ (monoclinic scheelite crystal) improves the selectivity to the {010} plane, which is the electrons collecting surface, can join the solid state mediator onto the oxygen-evolution photocatalyst in a dense state, and can improve the catalytic activity.

From the viewpoint of joining the solid state mediator onto the oxygen-evolution photocatalyst in a dense state, the organic carboxylic acid compound includes preferably at least one selected from the group consisting of an ether carboxylate, a fatty acid, a hydroxymonocarboxylic acid, and a polycarboxylic acid, more preferably an ether carboxylate, and specifically the following organic carboxylic acid compounds 1) to 4).

### 1) Ether carboxylate

Examples of the ether carboxylate include those represented by the following Formula (1).

R¹-O-(EO)ₙ-CH₂COOH (1)

In Formula (1), from the viewpoint of water solubility and function as an auxiliary agent, R¹ is preferably a linear or branched alkyl group or alkenyl group having 4 to 22 carbon atoms, more preferably a linear or branched alkyl group or alkenyl group having 8 to 18 carbon atoms, still more preferably a linear or branched alkyl group having 8 to 18 carbon atoms (alkyl ether carboxylate). From the viewpoint of water solubility and function as an auxiliary agent, the average number n of added moles of EO (ethyleneoxy group) is preferably 1 to 25, more preferably 2 to 12, still more preferably 3 to 8.

Examples of the ether carboxylate include polyoxyethylene (4.5) lauryl ether acetic acid, and the ether carboxylate may be a potassium salt, sodium salt, or ammonium salt thereof.

### 2) Fatty acid

Examples of the fatty acid include those represented by the following Formula (2).

R²-COOH (2)

In Formula (2), from the viewpoint of water solubility and function as an auxiliary agent, R² is preferably a linear or branched alkyl group or alkenyl group having 4 to 22 carbon atoms, more preferably a linear or branched alkyl group or alkenyl group having 8 to 22 carbon atoms, still more preferably a linear or branched alkyl group or alkenyl group having 12 to 18 carbon atoms.

Examples of the fatty acid include oleic acid, and the fatty acid may be a potassium salt, sodium salt, or ammonium salt thereof.

### 3) Hydroxymonocarboxylic acid

From the viewpoint of water solubility and function as an auxiliary agent, the hydroxymonocarboxylic acid has preferably a hydrocarbon group having 2 or more and 12 or less carbon atoms, more preferably a hydrocarbon group having 3 or more and 8 or less carbon atoms.

Examples of the hydroxymonocarboxylic acid include glycolic acid, lactic acid, glyceric acid, gluconic acid, or pantothenic acid.

### 4) Polycarboxylic acid

From the viewpoint of water solubility and function as an auxiliary agent, the polycarboxylic acid has preferably a hydrocarbon group having 2 or more and 12 or less carbon atoms, more preferably a hydrocarbon group having 3 or more and 8 or less carbon atoms.

The polycarboxylic acid is preferably a dicarboxylic acid, examples of the dicarboxylic acid include malic acid, tartaric acid, oxalic acid, malonic acid, maleic acid, succinic acid, or glutaric acid, and examples of tricarboxylic acids include citric acid.

The organic carboxylic acid compounds of 1) to 4) above may be used singly or in mixture of two or more kinds thereof.

In the step 1, preferably in a dispersion containing a photocatalyst, a metal salt (precursor of solid state mediator), and an organic carboxylic acid compound, the organic carboxylic acid compound is contained (mixed) by preferably 100 parts by mass or more, more preferably 500 parts by mass or more, still more preferably 1000 parts by mass or more from the viewpoint of increasing the coverage of the solid state mediator on the oxygen-evolution photocatalyst and improving the catalytic activity, preferably 100,000 parts by mass or less, more preferably 50,000 parts by mass or less, still more preferably 20,000 parts by mass or less from the same viewpoint, and preferably 100 parts by mass or more and 100,000 parts by mass or less, more preferably 500 parts by mass or more and 50,000 parts by mass or less, still more preferably 1,000 parts by mass or more and 20,000 parts by mass or less with respect to 100 parts by mass of the solid state mediator or a precursor (metal salt) thereof.

In the step 1, preferably in the dispersion, the solid state mediator or a precursor (metal salt) thereof is contained (mixed) by preferably 0.1 part by mass or more, more preferably 1 part by mass or more, still more preferably 5 parts by mass or more from the viewpoint of increasing the coverage of the solid state mediator on the oxygen-evolution photocatalyst and improving the catalytic activity, preferably 1000 parts by mass or less, more preferably 500 parts by mass or less, still more preferably 100 parts by mass or less from the same viewpoint, and preferably 0.1 part by mass or more and 1000 parts by mass or less, more preferably 1 part by mass or more and 500 parts by mass or less, still more preferably 5 parts by mass or more and 100 parts by mass or less with respect to 100 parts by mass of the oxygen-evolution photocatalyst.

The light to be emitted may be either sunlight or artificial light (fluorescent lamp, UV lamp, LED, mercury lamp, xenon lamp, metal halide lamp, sodium lamp, halogen lamp, and the like). The wavelength of the light is preferably 180 to 1000 nm, more preferably 300 to 800 nm from the viewpoint of increasing the coverage of the solid state mediator on the oxygen-evolution photocatalyst.

The irradiation light intensity is preferably 1 mW/cm² or more, more preferably 2 mW/cm² or more, still more preferably 5 mW/cm² or more from the viewpoint of increasing the coverage of the solid state mediator to the electrons collecting surface of the oxygen-evolution photocatalyst, and preferably 200 mW/cm² or less, more preferably 100 mW/cm² or less, still more preferably 50 mW/cm² or less from the same viewpoint.

step 2: a step of introducing (hereinafter referred to as "aspect 1") an ionic group into the solid state mediator to obtain an oxygen-evolution photocatalyst to which a solid state mediator having the ionic group is joined.

In order to introduce an ionic group into the solid state mediator, a compound containing an ionic group and a group exhibiting affinity for the solid state mediator may be used. Specifically, in a case where the solid state mediator includes gold (atoms), silver, or platinum, from the viewpoint of affinity for the metal, a thiol compound having an ionic group and a selenium compound having an ionic group are preferable and a thiol compound having an ionic group is more preferable.

The thiol compound having an ionic group has at least one ionic group (ionic substituent), among the ionic groups, examples of anionic groups include a sulfonic acid group, a phosphonic acid group, a phosphoric acid group, and a carboxy group, examples of cationic groups include an ammonium group, and among these, a thiol compound having an ammonium group or a carboxy group is preferable from the viewpoint of enhancing the catalytic activity.

From the same viewpoint, the ionic group is more preferably an anionic group, still more preferably a carboxylate anion.

The thiol compound having an ionic group has an alkylene group having preferably one or more carbon atoms, more preferably two or more carbon atoms from the viewpoint of enhancing the catalytic activity, and has an alkylene group having preferably 18 or less carbon atoms, more preferably 14 or less carbon atoms, still more preferably 8 or less carbon atoms from the same viewpoint.

The thiol compound having an ionic group preferably has two or less thiol groups, more preferably one thiol group from the viewpoint of enhancing the catalytic activity.

In a case where the thiol compound having an ionic group has an acidic group, the thiol compound may be an acid, a salt, or a mixture thereof.

As the thiol compound having an ionic group, thiomalic acid, 3-mercaptopropionic acid, thioglycolic acid, (11-mercaptoundecyl)trimethylammonium and the like are preferably used.

In the step 2, with respect to 100 parts by mass of the oxygen-evolution photocatalyst to which the solid state mediator is joined (supported), the thiol compound having an ionic group is contained (mixed) by preferably 0.1 part by mass or more, more preferably 1 part by mass or more from the viewpoint of enhancing the catalytic activity and preferably 100 parts by mass or less, more preferably 50 parts by mass or less from the same viewpoint, and is reacted by preferably 0.1 part by mass or more and 100 parts by mass or less, more preferably 1 part by mass or more and 50 parts by mass or less.

step 2': a step of introducing ("aspect 1") an ionic group into the solid state mediator and further reacting (hereinafter referred to as "aspect 2") the ionic group with an ionic polymer having a charge opposite to the charge of the ionic group to obtain an oxygen-evolution photocatalyst to which a solid state mediator having the ionic polymer is joined.

Similarly to the aspect 1, by introducing an ionic group into the solid state mediator and further reacting (ionically bonding) ("aspect 2") the ionic group with an ionic polymer having a charge opposite to the charge of the ionic group, it is possible to obtain an oxygen-evolution photocatalyst to which a solid state mediator into which an ionic group derived from the ionic polymer is introduced is joined.

Examples of the method for introducing an ionic group into the solid state mediator and further reacting (ionically bonding) the ionic group with an ionic polymer having a charge opposite to the charge of the ionic group include a method (i) in which an anionic group is introduced into the solid state mediator by mixing and reacting an oxygen-evolution photocatalyst to which a solid state mediator is joined (supported) with a thiol compound having an anionic group and then this is mixed and reacted (ionically bonded) with a polymer (hereinafter, also simply referred to as "cationic polymer") having a cationic group having a charge opposite to that of the anionic group.

Other methods include a method (ii) in which a cationic group is introduced into the solid state mediator by reacting an oxygen-evolution photocatalyst to which a solid state mediator is joined (supported) with a thiol compound having a cationic group and then this is mixed and reacted (ionically bonded) with a polymer (hereinafter, also simply referred to as "anionic polymer") having an anionic group having a charge opposite to that of the cationic group.

By these methods, a structure is formed in which the solid state mediator has an ionic group and an ionic polymer and the ionic group is ionically bonded to the ionic polymer.

The ionic polymer refers to a cationic polymer or anionic polymer, and as described later, the ionic polymer A and the ionic polymer B are used for convenience to distinguish the ionicity of ionic polymers. In other words, in a case where the ionic polymer A is a cationic polymer, it means that the ionic polymer B is an anionic polymer, and in a case where the ionic polymer A is an anionic polymer, it means that the ionic polymer B is a cationic polymer.

From the viewpoint of enhancing the catalytic activity, examples of the cationic polymer include a polymer having a quaternary ammonium group, specifically include one or more selected from a cationized polysaccharide, a polymer or copolymer of diallyl quaternary ammonium salt, a polymer or copolymer of (meth)acryloyloxyethyl quaternary ammonium salt, a polymer or copolymer of (meth)acrylamidopropyl quaternary ammonium salt, or a polymer of dimethylamine epichlorohydrin, and among these, include (a) cationized cellulose, (b) cationized guar gum, (c) at least one selected from the group consisting of diallyl quaternary ammonium salt polymer and diallyl quaternary ammonium salt/acrylamide copolymer, or (d) (meth)acryloyloxyethyl quaternary ammonium salt polymer and (meth)acryloyloxyethyl quaternary ammonium salt/acrylamide copolymer, and (e) dimethylamine epichlorohydrin polymer, and (c) is preferable. Quaternary ammonium groups also include protonated tertiary amines.

### (a) Cationized cellulose:

The cation substitution degree of the cationized cellulose is 0.01 to 1, that is, the average value per anhydroglucose unit is preferably 0.01 to 1, more preferably 0.02 to 0.5 from the viewpoint of enhancing the catalytic activity. The weight average molecular weight of the cationized cellulose is preferably about 100,000 to 8,000,000 from the viewpoint of enhancing the catalytic activity.

Examples of commercially available products of (a) include the product names "Poise C-80H" (manufactured by Kao Corporation) and "Polymer JR-400" (manufactured by The Dow Chemical Company).

### (b) Cationized guar gum:

The cationic substitution degree of the cationized guar gum is preferably 0.01 to 1, and more preferably 0.02 to 0.5 cationic groups are introduced into the sugar unit from the viewpoint of enhancing the catalytic activity.

Examples of commercially available products of (b) include the product name "Jaguar C-13C", which is commercially available from Rhodia Inc. under the trade name "Jaguar".

### (c) Diallyl quaternary ammonium salt polymer and diallyl quaternary ammonium salt/acrylamide copolymer:

The weight average molecular weight of the diallyl quaternary ammonium salt polymer is preferably about 30,000 to 1,000,000 from the viewpoint of enhancing the catalytic activity, and the weight average molecular weight of the diallyl quaternary ammonium salt/acrylamide copolymer is preferably about 30,000 to 2,000,000, more preferably about 1,000,000 to 2,000,000 from the viewpoint of enhancing the catalytic activity.

Examples of commercially available products of (c) include the product names "Merquat 100 (weight average molecular weight: 150,000)" and "Merquat 550 (weight average molecular weight: 1,600,000)", which are commercially available from The Lubrizol Corporation under the trade name "Merquat".

### (d) (Meth)acryloyloxyethyl quaternary ammonium salt polymer and (meth)acryloyloxyethyl quaternary ammonium salt/acrylamide copolymer:

The weight average molecular weight of the methacryloyloxyethyl quaternary ammonium salt/acrylamide copolymer is preferably about 1,000,000 to 10,000,000, more preferably about 2,000,000 to 6,000,000 from the viewpoint of enhancing the catalytic activity.

### (e) Dimethylamine epichlorohydrin polymer (poly-2-hydroxypropyldimethylammonium chloride):

The weight average molecular weight of the dimethylamine epichlorohydrin polymer is preferably about 1,000 to 100,000, more preferably about 3,000 to 10,000 from the viewpoint of enhancing the catalytic activity.

Commercially available products of (e) are commercially available from Yokkaichi Chemical Company Limited under the trade name "Cation Master", and examples thereof include the product name "Cation Master PD-7 (weight average molecular weight: 5000)".

As the anionic polymer, a polymer having a sulfuric acid group, a sulfonic acid group, a phosphonic acid group, a phosphoric acid group, or a carboxy group is preferable, among these, a polymer having a sulfonic acid group (sulfonic acid-based polymer) or a polymer having a carboxy group (carboxylic acid-based polymer) is preferable from the viewpoint of enhancing the catalytic activity.

As the polymer having a sulfonic acid group, sodium polystyrene sulfonate is preferable.

As the carboxylic acid-based polymer, a carboxylic acid-based polymer having a structural unit derived from an anionic group-containing monomer selected from an acrylate, a methacrylate, or a maleate is preferable. The carboxylic acid-based polymer is preferably a polymer composed of the anionic group-containing monomer, but may be a copolymer of the anionic group-containing monomer and a monomer other than the anionic group-containing monomer.

The weight average molecular weight (Mw) of the carboxylic acid-based polymer is preferably 1,000 or more, more preferably 5,000 or more, still more preferably 10,000 or more from the viewpoint of enhancing the catalytic activity. The weight average molecular weight (Mw) of the carboxylic acid-based polymer is preferably 500,000 or less, more preferably 100,000 or less, still more preferably 50,000 or less, yet still more preferably 35,000 or less from the same viewpoint.

The weight average molecular weight (Mw) of the polymer having a sulfonic acid group is preferably 10,000 or more, more preferably 50,000 or more, still more preferably 100,000 or more from the viewpoint of enhancing the catalytic activity. The weight average molecular weight (Mw) of the polymer having a sulfonic acid group is preferably 5,000,000 or less, more preferably 2,000,000 or less, still more preferably 1,000,000 or less, yet still more preferably 600,000 or less from the same viewpoint.

Examples of the monomer other than the anionic group-containing monomer include (meth)acrylic acid alkyl esters such as methyl (meth)acrylate and ethyl (meth)acrylate; N-substituted (meth)acrylamides such as N,N-dimethyl(meth)acrylamide, N,N-diethyl(meth)acrylamide, isopropyl(meth)acrylamide, and tert-butyl(meth)acrylamide, vinyl ethers such as methyl vinyl ether and butyl vinyl ether, styrene and the like, and olefin-based hydrocarbons such as ethylene, propylene, and isobutylene. These may be used singly or in combination of two or more kinds thereof. Among these, (meth)acrylic acid alkyl esters such as methyl (meth)acrylate and ethyl (meth)acrylate are preferable.

In the present specification, "(meth)acrylic" means "acrylic or methacrylic".

The weight average molecular weights (Mw) of the cationic polymer and the anionic polymer in the present specification are values determined by gel permeation chromatography (GPC) using polystyrene as a standard substance.

In the step 2', with respect to 100 parts by mass of the oxygen-evolution photocatalyst to which a solid state mediator into which the ionic group is introduced is joined (supported), the ionic polymer is contained (mixed) by preferably 5 parts by mass or more, more preferably 10 parts by mass or more from the viewpoint of enhancing the photocatalytic activity and preferably 500 parts by mass or less, more preferably 100 parts by mass or less from the same viewpoint.

Step 3: a step of introducing an ionic polymer having a charge opposite to a charge of the ionic group into the hydrogen-evolution photocatalyst.

Step 3': a step of introducing an ionic polymer having a charge opposite to the charge of the ionic polymer into the hydrogen-evolution photocatalyst.

The step 3 is a step of introducing an ionic polymer having a charge opposite to a charge of the ionic group into the hydrogen-evolution photocatalyst with respect to the ionic group of the solid state mediator in the step 2.

For example, in a case where the ionic group of the solid state mediator in the step 2 is an anionic group, an ionic polymer having an opposite charge may be introduced by mixing and dispersing the hydrogen-evolution photocatalyst using a polymer having a cationic group, or an ionic polymer having an opposite charge may be introduced by mixing and dispersing the hydrogen-evolution photocatalyst using a polymer having an anionic group and then mixing and redispersing the hydrogen-evolution photocatalyst with a polymer having a cationic group.

In other words, the heterojunction photocatalyst is a heterojunction photocatalyst having a solid state mediator between a hydrogen-evolution photocatalyst and an oxygen-evolution photocatalyst, in which the solid state mediator has an ionic group, the hydrogen-evolution photocatalyst has an ionic polymer B having a charge opposite to the charge of the ionic group via an ionic polymer A, and the solid state mediator and the hydrogen-evolution photocatalyst are joined to each other by ionic bonding between the ionic group and the ionic polymer B.

This means that the ionic polymer of the hydrogen-evolution photocatalyst is an ionic polymer A, the hydrogen-evolution photocatalyst has an ionic polymer B having a charge opposite to the charge of the ionic group via the ionic polymer A, and the solid state mediator and the hydrogen-evolution photocatalyst are joined to each other by ionic bonding between the ionic group and the ionic polymer B.

In a case where the ionic group is an anionic group, the ionic polymer A is an anionic polymer and the ionic polymer B is a cationic polymer. In a case where the ionic group is a cationic group, the ionic polymer A is a cationic polymer and the ionic polymer B is an anionic polymer.

The step 3' is a step of mixing and dispersing the hydrogen-evolution photocatalyst together with an ionic polymer having a charge opposite to that of the ionic group and introducing the ionic polymer having a charge opposite to a charge of the ionic group into the hydrogen-evolution photocatalyst with respect to the ionic group of the solid state mediator in the step 2'.

For example, in a case where the ionic group of the solid state mediator in the step 2' is an anionic group, the solid state mediator has a cationic polymer by further performing mixing and dispersion using a polymer having a cationic group, and an ionic polymer having an opposite charge may be introduced by mixing and dispersing the hydrogen-evolution photocatalyst using a polymer having an anionic group, or an ionic polymer having an opposite charge may be introduced by mixing and dispersing the hydrogen-evolution photocatalyst using a polymer having a cationic group and then mixing and redispersing the hydrogen-evolution photocatalyst with a polymer having an anionic group.

In other words, the heterojunction photocatalyst is a heterojunction photocatalyst having a solid state mediator between a hydrogen-evolution photocatalyst and an oxygen-evolution photocatalyst, in which the solid state mediator has an ionic group and an ionic polymer B, the ionic group is bonded to the ionic polymer B, the hydrogen-evolution photocatalyst has an ionic polymer A having a charge opposite to the charge of the ionic polymer B, and the solid state mediator and the hydrogen-evolution photocatalyst are joined to each other by ionic bonding between the ionic polymer B of the solid state mediator and the ionic polymer A of the hydrogen-evolution photocatalyst.

This means that the ionic polymer of the hydrogen-evolution photocatalyst is an ionic polymer A, the solid state mediator has the ionic group and an ionic polymer B having a charge opposite to the charge of the ionic polymer A, the ionic group is bonded to the ionic polymer B, and the solid state mediator and the hydrogen-evolution photocatalyst are joined to each other by ionic bonding between the ionic polymer B of the solid state mediator and the ionic polymer A of the hydrogen-evolution photocatalyst.

In a case where the ionic group is an anionic group, the ionic polymer A is an anionic polymer and the ionic polymer B is a cationic polymer. In a case where the ionic group is a cationic group, the ionic polymer A is a cationic polymer and the ionic polymer B is an anionic polymer.

As the ionic polymer, the anionic polymer or cationic polymer in the aspect 2 described above can be used.

In the step 3 and the step 3', with respect to 100 parts by mass of the hydrogen-evolution photocatalyst, the ionic polymer is contained (mixed) by preferably 5 parts by mass or more, more preferably 20 parts by mass or more from the viewpoint of enhancing the catalytic activity and preferably 500 parts by mass or less, more preferably 100 parts by mass or less from the same viewpoint, is preferably contained (mixed) by 5 parts by mass or more and 500 parts by mass or less, and is more preferably used by 20 parts by mass or more and 100 parts by mass or less.

Step 4: a step of mixing the oxygen-evolution photocatalyst obtained in step 2 to which a solid state mediator having the ionic group is joined (supported) with the hydrogen-evolution photocatalyst obtained in step 3 into which the ionic polymer is introduced.

Step 4': a step of mixing the oxygen-evolution photocatalyst obtained in step 2' to which a solid state mediator having the ionic polymer is joined with the hydrogen-evolution photocatalyst obtained in step 3' into which the ionic polymer is introduced.

In the step 4 and the step 4', by mixing the hydrogen-evolution photocatalyst obtained in the step 3 or step 3' into which the ionic polymer is introduced together with the oxygen-evolution photocatalyst to which a solid state mediator having the ionic group is joined (supported), an oxygen-evolution photocatalyst and a hydrogen-evolution photocatalyst can be joined to each other via a solid state mediator.

For example, a hydrogen-evolution photocatalyst into which a cationic group derived from a cationic polymer is introduced may be used in a case of using an oxygen-evolution photocatalyst to which a solid state mediator into which an anionic group is introduced is joined (supported), and a hydrogen-evolution photocatalyst into which an anionic group derived from an anionic polymer is introduced may be used in a case of using an oxygen-evolution photocatalyst to which a solid state mediator into which a cationic group is introduced is joined (supported).

In the step 4, the mixed mass ratio (hydrogen-evolution photocatalyst obtained in the step 3 into which the ionic polymer is introduced/oxygen-evolution photocatalyst obtained in the step 2 to which a solid state mediator having the ionic group is joined (supported)) is preferably 0.01 or more, more preferably 0.05 or more, still more preferably 0.07 or more from the viewpoint of enhancing the catalytic activity, preferably 10 or less, more preferably 5 or less, still more preferably 1 or less from the same viewpoint, and preferably 0.01 or more and 10 or less, more preferably 0.05 or more and 5 or less, still more preferably 0.07 or more and 1 or less.

In the step 4', the mixed mass ratio (hydrogen-evolution photocatalyst obtained in the step 3' into which the ionic polymer is introduced/oxygen-evolution photocatalyst obtained in the step 2' to which a solid state mediator having the ionic polymer is joined) is preferably 0.01 or more, more preferably 0.05 or more, still more preferably 0.07 or more from the viewpoint of enhancing the catalytic activity, preferably 10 or less, more preferably 5 or less, still more preferably 1 or less from the same viewpoint, and preferably 0.01 or more and 10 or less, more preferably 0.05 or more and 5 or less, still more preferably 0.07 or more and 1 or less.

In the step 4 and step 4', by adjusting the mixed mass ratio to the above range, in both of aspects 1 and 2, the solid state mediator and the hydrogen-evolution photocatalyst are joined to each other via an ionic polymer. As the solid state mediator and the hydrogen-evolution photocatalyst are joined to each other via the ionic polymer, strong electrostatic interaction acts and the hydrogen-evolution photocatalyst and the oxygen-evolution photocatalyst are not separated from each other but are joined to each other via the solid state mediator, and thus the catalytic activity is improved and water can be decomposed into oxygen and hydrogen with high water splitting reaction efficiency.

### <Photocatalyst composite>

The photocatalyst composite of the present invention has the heterojunction photocatalyst on a substrate.

The substrate is not particularly limited as long as the heterojunction photocatalyst can be immobilized on the surface of the substrate. Examples of the substrate include a ceramic substrate such as alumina; a glass substrate such as soda lime glass or borosilicate glass; a quartz substrate; a metal substrate such as titanium, copper, tin, iron, aluminum, or stainless steel; an organic substrate such as methacrylic resin, acrylic resin, urethane resin, phenol resin, melamine resin, urea resin, polyester resin, polycarbonate resin, fluororesin, polyethylene, polypropylene, polystyrene, polyamide, polyimide, polyacetal, polyvinyl chloride, or polyvinylidene chloride; a fiber substrate such as glass fiber or carbon fiber; a natural substrate such as paper, bamboo, or wood; and the like.

The substrate preferably has pores, and more preferably has continuous pores. With such a configuration, hydrogen gas generated by a water splitting reaction on the surface of the heterojunction photocatalyst can reach the outside through the pores, and hydrogen gas can be more efficiently produced.

The method for producing the photocatalyst composite is not particularly limited, and examples thereof include (1) a method in which a dispersion containing the heterojunction photocatalyst is applied onto a substrate, dried, and fired as necessary to immobilize the heterojunction photocatalyst on the substrate, (2) a method in which a dispersion containing the oxygen-evolution photocatalyst is applied onto a substrate, dried, and fired as necessary to immobilize the oxygen-evolution photocatalyst on the substrate, then the solid state mediator is joined to the surface of the oxygen-evolution photocatalyst by the same method as described above, and then the hydrogen-evolution photocatalyst is joined to the surface of the solid state mediator, and the like.

### <Applications of heterojunction photocatalyst and photocatalyst composite>

The heterojunction photocatalyst and photocatalyst composite of the present invention can be used not only as a photocatalyst that catalyzes the decomposition reaction of water or alcohols, but also as a photocatalyst that catalyzes the decomposition reaction of organic substances, and for example, can be used as an environmental purifier, an antibacterial/bactericidal agent, a deodorant, an antifouling agent, or the like for detoxifying harmful organic compounds, bacteria, offensive odor substances, inorganic compounds (ammonium ion, ammonia, nitrate ion, nitrite ion, and the like), and the like.

### <Method for producing hydrogen>

The method for producing hydrogen using the heterojunction photocatalyst or photocatalyst composite of the present invention is not particularly limited, and examples thereof include a method for producing hydrogen, which includes a step of irradiating the heterojunction photocatalyst or the photocatalyst composite with light in the presence of water or an alcohol to cause the decomposition reaction of the water or alcohol, thereby generating at least hydrogen.

The light to be emitted may be either sunlight or artificial light (fluorescent lamp, UV lamp, LED, mercury lamp, xenon lamp, metal halide lamp, sodium lamp, halogen lamp, and the like). The wavelength of light is preferably 180 to 1,000 nm, and more preferably 300 to 800 nm from the viewpoint of promoting the decomposition reaction. The irradiance of the light irradiation is preferably 1 µW/m² or more, and more preferably 1 mW/m² or more from the viewpoint of promoting the decomposition reaction. The reaction temperature is preferably 0°C or higher, and more preferably 15°C or higher from the viewpoint of promoting the decomposition reaction.

The amount of hydrogen generated (per 55 mg of catalyst amount) using the heterojunction photocatalyst or photocatalyst composite of the present invention is preferably 0.05 (µmol·h⁻¹) or more, more preferably 0.1 (µmol ·h⁻¹) or more, still more preferably 0.20 (µmol·h⁻¹) or more, and the upper limit thereof is not particularly limited but is preferably 1 (mol·h⁻¹) or less.

Regarding the embodiment described above, the present invention further discloses the following aspects.
[1] A heterojunction photocatalyst having a solid state mediator between a hydrogen-evolution photocatalyst and an oxygen-evolution photocatalyst, in which
   the solid state mediator and the hydrogen-evolution photocatalyst are joined to each other via an ionic polymer.
[2] The heterojunction photocatalyst according to [1], in which the solid state mediator has an ionic group, and the solid state mediator and the hydrogen-evolution photocatalyst are joined to each other via an ionic polymer having a charge opposite to a charge of the ionic group.
[3] The heterojunction photocatalyst according to [1] or [2], in which
   the solid state mediator has an ionic group,
   the hydrogen-evolution photocatalyst has the ionic polymer having a charge opposite to a charge of the ionic group, and
   the solid state mediator and the hydrogen-evolution photocatalyst are joined to each other by ionic bonding between the ionic group and the ionic polymer.
[4] The heterojunction photocatalyst according to [1] or [2], in which
   the solid state mediator has an ionic group,
   the hydrogen-evolution photocatalyst has
      an ionic polymer A and
      further an ionic polymer B having a charge opposite to a charge of the ionic group via the ionic polymer A, and
   the solid state mediator and the hydrogen-evolution photocatalyst are joined to each other by ionic bonding between the ionic group and the ionic polymer B.
[5] The heterojunction photocatalyst according to [1] or [2], in which
   the solid state mediator has an ionic group and further an ionic polymer B having a charge opposite to a charge of the ionic group via the ionic group,
   the hydrogen-evolution photocatalyst has an ionic polymer A, and
   the solid state mediator and the hydrogen-evolution photocatalyst are joined to each other by ionic bonding between the ionic polymer B of the solid state mediator and the ionic polymer A of the hydrogen-evolution photocatalyst.
[6] The heterojunction photocatalyst according to any one of [2] to [5], in which the ionic group is an anionic group or a cationic group.
[7] The heterojunction photocatalyst according to [6], in which the anionic group is preferably a sulfonic acid group, a phosphonic acid group, a phosphoric acid group, or a carboxy group, more preferably a sulfonic acid group or a carboxy group, and the cationic group is a quaternary ammonium group.
[8] The heterojunction photocatalyst according to [6] or [7], in which
   the ionic group is an anionic group,
   the ionic polymer A is an anionic polymer, and
   the ionic polymer B is a cationic polymer.
[9] The heterojunction photocatalyst according to [6] or [7], in which
   the ionic group is a cationic group,
   the ionic polymer A is a cationic polymer, and
   the ionic polymer B is an anionic polymer.
[10] The heterojunction photocatalyst according to [8] or [9], in which the anionic polymer includes preferably a polymer having a sulfuric acid group, a sulfonic acid group, a phosphonic acid group, a phosphoric acid group, or a carboxy group, more preferably a polymer having a sulfonic acid group (sulfonic acid-based polymer) or a polymer having a carboxy group (carboxylic acid-based polymer).
[11] The heterojunction photocatalyst according to any one of [8] to [10], in which the cationic polymer includes preferably a polymer having a quaternary ammonium group, more preferably one or more selected from a cationized polysaccharide, a polymer or copolymer of diallyl quaternary ammonium salt, a polymer or copolymer of (meth)acryloyloxyethyl quaternary ammonium salt, a polymer or copolymer of (meth)acrylamidopropyl quaternary ammonium salt, or a polymer of dimethylamine epichlorohydrin, still more preferably (a) cationized cellulose, (b) cationized guar gum, (c) at least one selected from the group consisting of diallyl quaternary ammonium salt polymer and diallyl quaternary ammonium salt/acrylamide copolymer, (d) (meth)acryloyloxyethyl quaternary ammonium salt polymer and (meth)acryloyloxyethyl quaternary ammonium salt/acrylamide copolymer, or (e) dimethylamine epichlorohydrin polymer.
[12] The heterojunction photocatalyst according to any one of [1] to [11], in which the hydrogen-evolution photocatalyst is a metal oxide.
[13] The heterojunction photocatalyst according to [12], in which the metal oxide is preferably TiO₂, SrTiO₃, La₂Ti₂O₇, SnNb₂O₆, and a compound in which TiO₂, SrTiO₂, La₂Ti₂O₂, or SnNb₂O₆ is doped with one or more metals selected from Cr, Sb, Ta, Ir, or La, more preferably SrTiO₂.
[14] The heterojunction photocatalyst according to any one of [1] to [13], in which the oxygen-evolution photocatalyst is a metal oxide.
[15] The heterojunction photocatalyst according to [14], in which the metal oxide is preferably BiVO₄, TiO₂, WO₃, SrTiO₂, Ag₃PO₄, SnNb₂O₆, Bi₂WO₆, Fe₂TiO₅, Fe₂O₃, Bi₂MoO₆, and a compound in which BiVO₄, TiO₂, WO₃, SrTiO₃, Ag₃PO₄, SnNb₂O₃, Bi₂WO₆, Fe₂TiO₅, Fe₂O₃, or Bi₂MoO₆ is doped with one or more metals selected from Cr, Ni, Sb, Nb, Th, Mo, or W, more preferably BiVO₄.
[16] The heterojunction photocatalyst according to any one of [1] to [15], in which the solid state mediator is a transition metal or a compound of the transition metal.
[17] The heterojunction photocatalyst according to any one of [1] to [15], in which the solid state mediator includes preferably transition metals of gold, silver, copper, nickel, titanium, manganese, rhodium, palladium, ruthenium, and iridium, more preferably gold or silver, still more preferably gold.
[18] The heterojunction photocatalyst according to any one of [1] to [17], in which the solid state mediator is joined onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used.
[19] A method for producing the heterojunction photocatalyst according to any one of [1] to [18], the method including the following steps 1 to 4, provided that steps 2 and 3 are performed in random order:
   step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
   step 2: a step of introducing an ionic group into the solid state mediator to obtain an oxygen-evolution photocatalyst to which a solid state mediator having the ionic group is joined;
   step 3: a step of introducing an ionic polymer having a charge opposite to a charge of the ionic group into the hydrogen-evolution photocatalyst; and
   step 4: a step of mixing the oxygen-evolution photocatalyst obtained in step 2 to which a solid state mediator having the ionic group is joined with the hydrogen-evolution photocatalyst obtained in step 3 into which the ionic polymer is introduced.
[20] A method for producing the heterojunction photocatalyst according to any one of [1] to [18], the method including the following steps 1, 2', 3', and 4', provided that steps 2' and 3' are performed in random order:
   step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
   step 2': a step of introducing an ionic group into the solid state mediator and further reacting the ionic group with an ionic polymer having a charge opposite to a charge of the ionic group to obtain an oxygen-evolution photocatalyst to which a solid state mediator having the ionic polymer is joined;
   step 3': a step of introducing an ionic polymer having a charge opposite to the charge of the ionic polymer into the hydrogen-evolution photocatalyst; and
   step 4': a step of mixing the oxygen-evolution photocatalyst obtained in step 2' to which a solid state mediator having the ionic polymer is joined with the hydrogen-evolution photocatalyst obtained in step 3' into which the ionic polymer is introduced.
[21] The method for producing a heterojunction photocatalyst according to [19] or [20], the method including a step of irradiating a dispersion containing an oxygen-evolution photocatalyst in addition to the organic carboxylic acid compound and the solid state mediator or a precursor of the solid state mediator with light in a case of using the photoelectrodeposition method in the step 1.
[22] The method for producing a heterojunction photocatalyst according to any one of [19] to [21], in which the organic carboxylic acid compound is at least one selected from the group consisting of an ether carboxylate, a fatty acid, a hydroxymonocarboxylic acid, and a polycarboxylic acid.
[23] The method for producing a heterojunction photocatalyst according to any one of [19] to [22], in which
   the organic carboxylic acid compound includes an ether carboxylate, and
   the solid state mediator includes gold.
[24] The method for producing a heterojunction photocatalyst according to any one of [19] to [23], in which the organic carboxylic acid compound is preferably 100 parts by mass or more and 100,000 parts by mass or less, more preferably 500 parts by mass or more and 50,000 parts by mass or less, still more preferably 1000 parts by mass or more and 20,000 parts by mass or less with respect to 100 parts by mass of the solid state mediator or a precursor (metal salt) of the solid state mediator in the step 1.
[25] The method for producing a heterojunction photocatalyst according to any one of [19] to [24], in which the solid state mediator or a precursor (metal salt) of the solid state mediator is preferably 0.1 part by mass or more and 1000 parts by mass or less, more preferably 1 part by mass or more and 500 parts by mass or less, still more preferably 5 parts by mass or more and 100 parts by mass or less with respect to 100 parts by mass of the oxygen-evolution photocatalyst in the step 1.
[26] The method for producing a heterojunction photocatalyst according to any one of [19] to [25], in which a thiol compound having an ionic group is used in introduction of an ionic group into the solid state mediator in the step 2 or the step 2'.
[27] The method for producing a heterojunction photocatalyst according to any one of [19] to [26], in which the thiol compound having an ionic group is reacted by preferably 0.1 part by mass or more and 100 parts by mass or less, more preferably 1 part by mass or more and 50 parts by mass or less with respect to 100 parts by mass of the oxygen-evolution photocatalyst to which the solid state mediator is joined (supported) in introduction of an ionic group into the solid state mediator in the step 2 or the step 2'.
[28] The method for producing a heterojunction photocatalyst according to any one of [19] to [27], in which the ionic polymer is preferably contained (mixed) by 5 parts by mass or more and 500 parts by mass or less, and is more preferably used by 20 parts by mass or more and 100 parts by mass or less with respect to 100 parts by mass of the hydrogen-evolution photocatalyst in the step 3 and the step 3'.
[29] The method for producing a heterojunction photocatalyst according to any one of [19], [21] to [28], in which a mixed mass ratio (hydrogen-evolution photocatalyst obtained in the step 3 into which the ionic polymer is introduced/oxygen-evolution photocatalyst obtained in the step 2 to which the solid state mediator having an ionic group is joined (supported)) is preferably 0.01 or more and 10 or less, more preferably 0.05 or more and 5 or less, still more preferably 0.07 or more and 1 or less in the step 4.
[30] The method for producing a heterojunction photocatalyst according to any one of [20] to [28], in which a mixed mass ratio (hydrogen-evolution photocatalyst obtained in the step 3' into which the ionic polymer is introduced/oxygen-evolution photocatalyst obtained in the step 2' to which the solid state mediator having an ionic polymer is joined) is preferably 0.01 or more and 10 or less, more preferably 0.05 or more and 5 or less, still more preferably 0.07 or more and 1 or less in the step 4'.
[31] A photocatalyst composite comprising the heterojunction photocatalyst according to any one of [1] to [18] on a substrate.
[32] Use of the heterojunction photocatalyst according to any one of [1] to [18] as a photocatalyst for water splitting or a photocatalyst for organic substance decomposition.
[33] A method for producing hydrogen, the method comprising irradiating the heterojunction photocatalyst according to any one of [1] to [18] or the photocatalyst composite according to [31] with light in presence of water or an alcohol.

### EXAMPLES

Hereinafter, the present invention will be specifically described based on Examples. Unless otherwise specified, reagents manufactured by FUJIFILM Wako Pure Chemical Corporation were used.

### (Example 1)

### <Preparation of bismuth vanadate (BiVO₄)>

6.06 g of bismuth nitrate pentahydrate and 1.46 g of ammonium vanadate were dissolved in 50 mL of 2 mol/L nitric acid. Thereafter, aqueous ammonia was added dropwise to the solution until the pH reached 2.0, and 0.12 g of sodium chloride was added to obtain a yellow-orange dispersion. The dispersion was transferred to a fluororesin container and reacted in an autoclave at 170°C for 24 hours. After the reaction, the precipitate was separated by suction filtration, and the obtained precipitate was washed with deionized water, filtered, and dried under reduced pressure. The dried sample was calcined in an electric furnace at 500°C for 2 hours to obtain a yellow powder of BiVO₄. SEM (manufactured by JEOL, JSM-IT500HR) observation confirmed that the prepared BiVO₄ particles have a decahedral structure with the {010} plane as the basal plane. Powder X-ray diffraction (MiniFlex II diffractometer, manufactured by Rigaku Corporation) confirmed that the crystal system is a monoclinic scheelite crystal.

### <Preparation of Au-BiVO₄>

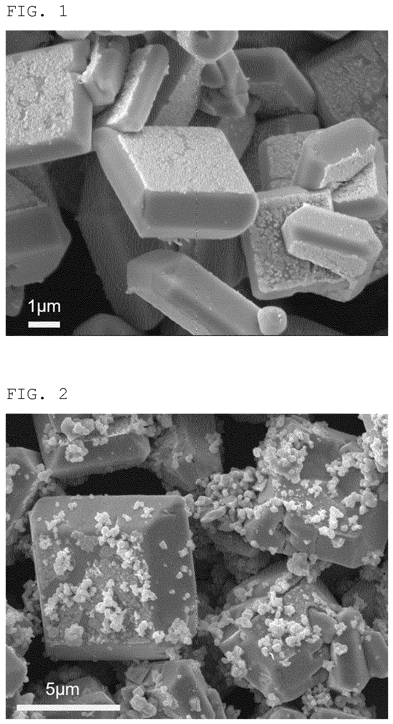

150 mg of the prepared BiVO₄ was put into a glass container and dispersed in 20 mL of deionized water, 18.8 mg of tetrachloroauric acid tetrahydrate and 7.76 mL of AKYPO RLM-45NV (manufactured by Kao Corporation, polyoxyethylene (4.5) sodium lauryl ether acetate, active ingredient 24%) were added, and the mixture was irradiated with light for 5 minutes using a 300 W solar simulator (manufactured by PECCELL, PEC-L01, current value 7.5 A) while stirring was performed using a stirrer tip. The irradiation light intensity at a wavelength of 435 nm from an optical power meter (manufactured by HIOKI E.E. CORPORATION, H3664) was 40 mW/cm². After the reaction, the precipitate was separated by suction filtration, and the obtained precipitate was washed with deionized water, filtered, and dried under reduced pressure to obtain a green powder of Au-BiVO₄. SEM observation showed that the prepared Au-BiVO₄ particles had an Au layer that was selectively formed on the {010} plane of BiVO₄ as shown in Fig. 1.

### <Preparation of MPA-treated Au-BiVO₄>

50 mg of the prepared Au-BiVO₄ was put into a glass container and dispersed in 5 mL of deionized water, 12 µL of 3-mercaptopropionic acid (MPA) was added, and stirring was performed for 2 hours using a stirrer tip. After the reaction, the precipitate was separated by suction filtration, and the obtained precipitate was washed with deionized water, filtered, and dried under reduced pressure to obtain a green powder of MPA-treated Au-BiVO₄.

### <Preparation of cationically modified Au-BiVO₄>

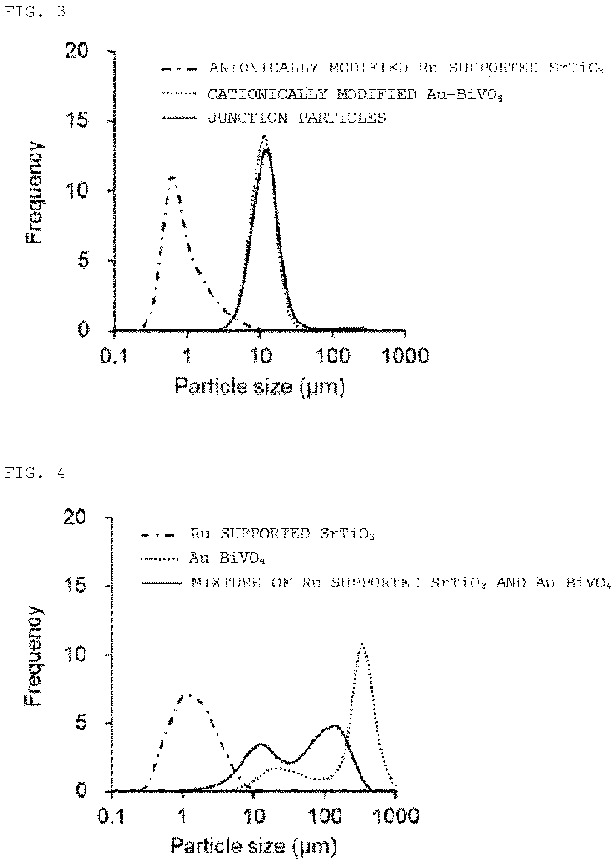

50 mg of the prepared MPA-treated Au-BiVO₄ was put into a glass container and dispersed in 1 mL of 0.8% by mass aqueous solution of Merquat 100 (manufactured by The Lubrizol Corporation), a cationic polymer (8.0 mg of polymer amount), and stirred for 2 hours using a stirrer tip. Thereafter, the precipitate was separated by suction filtration, and the obtained precipitate was washed with deionized water, filtered, and dried under reduced pressure to obtain a green powder of cationically modified Au-BiVO₄. The volume particle size distribution of the obtained cationically modified Au-BiVO₄ in water was evaluated by laser diffraction scattering measurement (LA960 manufactured by HORIBA, Ltd.), and the results are as shown in Fig. 3.

### <Preparation of Ru-supported SrTiO₃>

120 mg of SrTiO₃ (manufactured by KOJUNDO CHEMICAL LABORATORY Co., Ltd.) was put into a glass container and dispersed in 160 mL of deionized water. 2.2 mg of ruthenium chloride n-hydrate was added, and ultrasonic dispersion treatment was performed for 15 minutes. 20 mL of methanol was added to the obtained dispersion, and light irradiation was performed using a 300 W xenon lamp for 120 minutes while argon gas was bubbled at 20 mL/min for 60 minutes, whereby Ru was supported on SrTiO₃. After the reaction, the precipitate was separated by suction filtration, and the obtained precipitate was washed with deionized water, filtered, and dried under reduced pressure to obtain a gray powder of Ru-supported SrTiO₃.

### <Preparation of anionically modified Ru-supported SrTiO₃>

100 mg of the prepared Ru-supported SrTiO₃ was put into a glass container and dispersed in 1.13 mL of 4% by mass aqueous solution of Poiz 520 (weight average molecular weight: 21,000, copolymer of sodium acrylate/sodium maleate, manufactured by Kao Corporation), an anionic polymer (0.05 g of polymer amount), and ultrasonic irradiation was carried out for 30 minutes. Thereafter, the dispersion was suction-filtered to recover the solid product. The recovered product was washed with deionized water, filtered, and dried under reduced pressure to obtain a gray powder of anionically modified Ru-supported SrTiO₃. The volumetric particle size distribution of the obtained anionically modified Ru-supported SrTiO₃ in water was evaluated, and the results are as shown in Fig. 3.

### <Preparation of heterojunction photocatalyst>

50 mg of cationically modified Au-BiVO₄ and 5 mg of anionically modified Ru-supported SrTiO₃ were put into a glass container, dispersed in 1 mL of deionized water, stirred for 30 minutes, and then allowed to stand, all particles in the dispersion were observed to settle. The volume particle size distribution of the obtained particles was measured, and the results are as shown in Fig. 3. It was verified that the fine particle component derived from Ru-supported SrTiO₃ does not exist alone but Au-BiVO₄ and Ru-supported SrTiO₃ are completely (100%) composited. These particles (junction particles) were applied onto a silicon substrate, dried, and observed under SEM to obtain an image in which Ru-supported SrTiO₃ was formed on Au formed on the {010} plane of BiVO₄ as shown in Fig. 2.

### <Evaluation of water splitting activity of heterojunction photocatalyst>

The junction particles obtained above were added to 180 mL of water, argon gas was bubbled at 20 mL/min for 30 minutes, and then light irradiation was performed using a 300 W xenon lamp. The generated gas was analyzed using a gas chromatograph of a TCD detector. Light irradiation was continuously performed for 5 hours, and the average hydrogen generation rate was calculated. The results are shown in Table 1.

### (Comparative Example 1)

When Au-BiVO₄ was prepared, 0.36 mL of methanol was added as a sacrificial reagent (auxiliary agent) for holes instead of adding AKYPO RLM-45NV. When the heterojunction photocatalyst was prepared, Au-BiVO₄ was not subjected to 3-mercaptopropionic acid treatment or cationic modification and Ru-supported SrTiO₃ was not subjected to anion modification. A sample was prepared by the same operation as in Example 1 except for these changes. Fig. 4 shows the results of volume particle size distribution of a mixed sample of Ru-supported SrTiO₃ and Au-BiVO₄. There is distribution in the 1 to 5 um region, which is not observed in the volume particle size distribution of Au-BiVO₄, and this indicates that the mixed sample is not uniformly composited, and part of Ru-supported SrTiO₃ is floating.

### (Example 2)

A heterojunction photocatalyst was prepared by the same operation as in Example 1 except that 0.36 mL of methanol was added as a sacrificial reagent (auxiliary agent) for holes instead of adding AKYPO RLM-45NV when Au-BiVO₄ was prepared.

### (Example 3)

A heterojunction photocatalyst was prepared by the same operation as in Example 1 except that 1.55 mL of potassium oleate FR-14 (manufactured by Kao Corporation) was added instead of adding AKYPO RLM-45NV when Au-BiVO₄ was prepared.

### (Example 4)

### <Preparation of cationically modified Ru-supported SrTiO₃>

The anionically modified Ru-supported SrTiO₃ powder prepared in the same manner as in Example 1 was dispersed by 50 mg in 1 mL of 0.8% by mass aqueous solution of Merquat 100 (manufactured by The Lubrizol Corporation), a cationic polymer (8.0 mg of polymer amount), and stirred for 10 minutes using a stirrer tip. After the reaction, the precipitate was separated by suction filtration. The obtained precipitate was washed with deionized water and dried under reduced pressure to obtain a gray powder of cationically modified Ru-supported SrTiO₃.

### <Preparation of heterojunction photocatalyst>

In the same manner as in Example 1, 50 mg of the prepared MPA-treated Au-BiVO₄ and 5 mg of cationically modified Ru-supported SrTiO₃ were put into a glass container, dispersed in 1 mL of deionized water, stirred for 30 minutes to prepare a heterojunction photocatalyst.

### (Example 5)

### <Preparation of cationically modified Ru-supported SrTiO₃>

The Ru-supported SrTiO₃ powder prepared in the same manner as in Example 1 was dispersed by 50 mg in 1 mL of 0.8% by mass aqueous solution of Merquat 100 (manufactured by The Lubrizol Corporation), a cationic polymer (8.0 mg of polymer amount), and ultrasonic irradiation was carried out for 30 minutes. Thereafter, the dispersion was suction-filtered to recover the solid product. The recovered product was washed with deionized water, filtered, and dried under reduced pressure to obtain a gray powder of cationically modified Ru-supported SrTiO₃.

### <Preparation of heterojunction photocatalyst>

In the same manner as in Example 1, 50 mg of the prepared MPA-treated Au-BiVO₄ and 5 mg of cationically modified Ru-supported SrTiO₃ were put into a glass container, dispersed in 1 mL of deionized water, stirred for 30 minutes to prepare a heterojunction photocatalyst.

### (Example 6)

In the operation of Example 1, when cationically modified Au-BiVO₄ was prepared, 1 mL of 0.8% by mass aqueous solution (polymer only amount 8.0 mg) of 2-(dimethylamino)ethyl methacrylate · diethyl sulfate polymer (weight average molecular weight: 160,000), a cationic polymer, was added instead of adding Merquat 100.

When anionically modified Ru-supported SrTiO₃ was prepared, 1.13 mL of 4% by mass aqueous solution (polymer only amount 0.05 g) of sodium polystyrene sulfonate (Na-PSS) (weight average molecular weight: 500,000 (manufactured by FUJIFILM Wako Pure Chemical Corporation)), an anionic polymer, was added instead of adding Poiz 520. A heterojunction photocatalyst was prepared by the same operation as in Example 1 except for this change.

Table 1 shows the evaluation results of water splitting activity for Examples 1 to 6 and Comparative Example 1.

**[Table 1]**

| | Example 1 | Example 2 | Example 3 | Example 4 | Example 5 | Example 6 | Comparative Example 1 |
|---|---|---|---|---|---|---|---|
| Hydrogen-evolution photocatalyst | Ru/SrTiO₃ | Ru/SrTiO₃ | Ru/SrTiO₃ | Ru/SrTiO₃ | Ru/SrTiO₃ | Ru/SrTiO₃ | Ru/SrTiO₃ |
| Oxygen-evolution photocatalyst | BiVO₄ | BiVO₄ | BiVO₄ | BiVO₄ | BiVO₄ | BiVO₄ | BiVO₄ |
| Solid state mediator | Au | Au | Au | Au | Au | Au | Au |
| Electron collecting surface of oxygen-evolution photocatalyst | {010} | {010} | {010} | {010} | {010} | {010} | {010} |
| Auxiliary agent in solid state mediator supporting | AKYPO RLM-45NV | Methanol | Potassium oleate | AKYPO RLM-45NV | AKYPO RLM-45NV | AKYPO RLM-45NV | Methanol |
| Polymer supported on hydrogen-evolution photocatalyst | Poiz 520 | Poiz 520 | Poiz 520 | Poiz 520 → Merquat 100 | Merquat 100 | Na-PSS | Absent |
| Polymer supported on solid state mediator | Merquat 100 | Merquat 100 | Merquat 100 | Absent (MPA) | Absent (MPA) | 2-(Dimethylamino) ethyl methacrylate • diethyl sulfate polymer | Absent |
| Water splitting activity (Hydrogen generation rate) (µmol ·h⁻¹) | 0.22 | 0.11 | 0.13 | 0.13 | 0.22 | 0.20 | 0.02 |

From the evaluation results in Table 1 above, it has been found that Examples 1 to 6 using a heterojunction photocatalyst in which a solid state mediator and a hydrogen-evolution photocatalyst are joined to each other via an ionic polymer are superior in the water splitting activity to Comparative Example 1 using a heterojunction photocatalyst in which an ionic polymer is not interposed between a solid state mediator and a hydrogen-evolution photocatalyst.

### INDUSTRIAL APPLICABILITY

The heterojunction photocatalyst of the present invention is useful as a photocatalyst used for water splitting or organic substance decomposition.

## Claims

1. A heterojunction photocatalyst comprising a solid state mediator between a hydrogen-evolution photocatalyst and an oxygen-evolution photocatalyst, wherein
the solid state mediator and the hydrogen-evolution photocatalyst are joined to each other via an ionic polymer.

2. The heterojunction photocatalyst according to claim 1, wherein the solid state mediator has an ionic group, and the solid state mediator and the hydrogen-evolution photocatalyst are joined to each other via an ionic polymer having a charge opposite to a charge of the ionic group.

3. The heterojunction photocatalyst according to claim 1 or 2, wherein
the solid state mediator has an ionic group
the hydrogen-evolution photocatalyst has the ionic polymer having a charge opposite to a charge of the ionic group, and
the solid state mediator and the hydrogen-evolution photocatalyst are joined to each other by ionic bonding between the ionic group and the ionic polymer.

4. The heterojunction photocatalyst according to claim 1 or 2, wherein
the solid state mediator has an ionic group,
the hydrogen-evolution photocatalyst has
an ionic polymer A and
further an ionic polymer B having a charge opposite to a charge of the ionic group via the ionic polymer A, and
the solid state mediator and the hydrogen-evolution photocatalyst are joined to each other by ionic bonding between the ionic group and the ionic polymer B.

5. The heterojunction photocatalyst according to claim 1 or 2, wherein
the solid state mediator has an ionic group and further an ionic polymer B having a charge opposite to a charge of the ionic group via the ionic group,
the hydrogen-evolution photocatalyst has an ionic polymer A, and
the solid state mediator and the hydrogen-evolution photocatalyst are joined to each other by ionic bonding between the ionic polymer B of the solid state mediator and the ionic polymer A of the hydrogen-evolution photocatalyst.

6. The heterojunction photocatalyst according to any one of claims 2 to 5, wherein the ionic group is an anionic group or a cationic group.

7. The heterojunction photocatalyst according to claim 4 or 5, wherein
the ionic group is an anionic group,
the ionic polymer A is an anionic polymer, and
the ionic polymer B is a cationic polymer.

8. The heterojunction photocatalyst according to claim 4 or 5, wherein
the ionic group is a cationic group,
the ionic polymer A is a cationic polymer, and
the ionic polymer B is an anionic polymer.

9. The heterojunction photocatalyst according to claim 7 or 8, wherein the anionic polymer includes a sulfonic acid-based polymer or a carboxylic acid-based polymer.

10. The heterojunction photocatalyst according to claim 7 or 8, wherein the cationic polymer includes at least one selected from the group consisting of a cationized polysaccharide, a polymer or copolymer of diallyl quaternary ammonium salt, a polymer or copolymer of (meth)acryloyloxyethyl quaternary ammonium salt, a polymer or copolymer of (meth)acrylamidopropyl quaternary ammonium salt, and a polymer of dimethylamine epichlorohydrin.

11. The heterojunction photocatalyst according to any one of claims 1 to 10, wherein the hydrogen-evolution photocatalyst is a metal oxide.

12. The heterojunction photocatalyst according to any one of claims 1 to 11, wherein the oxygen-evolution photocatalyst is a metal oxide.

13. The heterojunction photocatalyst according to any one of claims 1 to 12, wherein the solid state mediator is a transition metal or a compound of the transition metal.

14. The heterojunction photocatalyst according to any one of claims 1 to 13, wherein the solid state mediator is joined onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used.

15. A method for producing the heterojunction photocatalyst according to any one of claims 1 to 14, the method comprising steps 1 to 4 below, provided that steps 2 and 3 are performed in random order:
step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
step 2: a step of introducing an ionic group into the solid state mediator to obtain an oxygen-evolution photocatalyst to which a solid state mediator having the ionic group is joined;
step 3: a step of introducing an ionic polymer having a charge opposite to a charge of the ionic group into the hydrogen-evolution photocatalyst; and
step 4: a step of mixing the oxygen-evolution photocatalyst obtained in step 2 to which a solid state mediator having the ionic group is joined with the hydrogen-evolution photocatalyst obtained in step 3 into which the ionic polymer is introduced.

16. A method for producing the heterojunction photocatalyst according to any one of claims 1 to 14, the method comprising steps 1, 2', 3', and 4' below, provided that steps 2' and 3' are performed in random order:
step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
step 2': a step of introducing an ionic group into the solid state mediator and further reacting the ionic group with an ionic polymer having a charge opposite to a charge of the ionic group to obtain an oxygen-evolution photocatalyst to which a solid state mediator having the ionic polymer is joined;
step 3': a step of introducing an ionic polymer having a charge opposite to the charge of the ionic polymer into the hydrogen-evolution photocatalyst; and
step 4': a step of mixing the oxygen-evolution photocatalyst obtained in step 2' to which a solid state mediator having the ionic polymer is joined with the hydrogen-evolution photocatalyst obtained in step 3' into which the ionic polymer is introduced.

17. The method for producing a heterojunction photocatalyst according to claim 15 or 16, the method comprising a step of irradiating a dispersion containing an oxygen-evolution photocatalyst in addition to the organic carboxylic acid compound and the solid state mediator or a precursor of the solid state mediator with light in a case of using the photoelectrodeposition method in the step 1.

18. The method for producing a heterojunction photocatalyst according to any one of claims 15 to 17, wherein the organic carboxylic acid compound is at least one selected from the group consisting of an ether carboxylate, a fatty acid, a hydroxymonocarboxylic acid, and a polycarboxylic acid.

19. The method for producing a heterojunction photocatalyst according to any one of claims 15 to 18, wherein
the organic carboxylic acid compound includes an ether carboxylate, and
the solid state mediator includes gold.

20. The method for producing a heterojunction photocatalyst according to any one of claims 15 to 19, wherein a thiol compound having an ionic group is used in introduction of an ionic group into the solid state mediator in the step 2 or the step 2'.

21. A photocatalyst composite comprising the heterojunction photocatalyst according to any one of claims 1 to 14 on a substrate.

22. Use of the heterojunction photocatalyst according to any one of claims 1 to 14 as a photocatalyst for water splitting or a photocatalyst for organic substance decomposition.

23. A method for producing hydrogen, the method comprising irradiating the heterojunction photocatalyst according to any one of claims 1 to 14 or the photocatalyst composite according to claim 20 with light in presence of water or an alcohol.
